# EUROPÄISCHE PATENTSCHRIFT

(11) **EP 3 079 793 B1**
(45) Veröffentlichungstag und Bekanntmachung des Hinweises auf die Patenterteilung: **02.09.2020**
(21) Anmeldenummer: 14812427.4
(22) Anmeldetag: 04.12.2014
(51) Int. Cl.: B01D 35/30

(54) **FILTERSYSTEM UND FILTERELEMENT MIT DICHTUNGSVORRICHTUNG**
FILTER SYSTEM AND ELEMENT WITH SEALING DEVICE
SYSTEME ET ELEMENT DE FILTRAGE AVEC DISPOSITIF D'ÉTANCHÉITÉ

(30) Priorität: 11.12.2013 DE 202013011841 U; 12.08.2014 DE 102014011786
(43) Veröffentlichungstag der Anmeldung: 19.10.2016
(73) Patentinhaber: Mann+Hummel GmbH, 71636 Ludwigsburg (DE)
(72) Erfinder: JAINEK, Herbert, 74074 Heilbronn (DE)
(74) Vertreter: Seyboth, Matthias
(86) Internationale Anmeldenummer: PCT/EP2014/076607
(87) Internationale Veröffentlichungsnummer: WO 2015/086432

(56) Entgegenhaltungen:
- EP-A1- 2 481 460
- WO-A1-97/16235
- DE-A1-102007 046 209
- DE-A1-102010 020 727
- DE-U1-202006 018 334
- DE-U1-202006 018 335
- FR-A1- 2 598 936
- FR-A1- 2 762 229
- US-A- 4 721 563
- US-A1- 2002 158 006
- US-A1- 2009 127 198
- US-A1- 2011 132 828

## Beschreibung

### Technisches Gebiet

Die Erfindung betrifft ein Filtersystem zum Filtern eines Fluids mit einer Dichtungsvorrichtung, insbesondere zur Verwendung als Öl- oder Kraftstofffilter einer Brennkraftmaschine eines Kraftfahrzeugs, sowie ein Filterelement und eine Dichtungsvorrichtung zum Einbau in ein solches Filtersystem.

### Stand der Technik

Aus der DE 20 2006 018 335 U1 ist ein Filtersystem mit einem auswechselbaren Filterelement bekannt, an dem die Dichtung in der Axialrichtung verschiebbar und unverlierbar gehalten ist. Insbesondere umfasst die Dichtung einen um das Filterelement umlaufenden Dichtungsträger mit einem Dichtring, wobei der umlaufende Dichtungsträger bezogen auf eine Radialrichtung innenseitig mit mindestens einer Sicherungskante versehen ist. Dabei weist das Filterelement an seinen beiden in der Axialrichtung gelegenen Enden je einen insbesondere als Endscheibe ausgebildeten Endanschlag für die Sicherungskante auf. Die unverlierbare Halterung der Dichtung am Filterelement führt dazu, dass bei der Entnahme des Filterelementes aus dem Filtergehäuse die Dichtung für die beiden Gehäuseteile gleich mit entnommen wird und nicht wieder verwandt werden kann. Das neu einzusetzende, gleichartige Filterelement trägt die unverlierbar gehaltene Dichtung, die beim Einsetzen des neuen Filterelementes in Position gebracht wird. Die neue Dichtung kann nicht vergessen werden. Die axiale Verschiebbarkeit der Dichtung lässt zu, dass zunächst das Filterelement positioniert wird, ohne dass die Dichtung dabei stört. Unabhängig von der Lage des Filterelementes kann die Dichtung in ihre vorgesehene Montageposition gebracht werden. Insbesondere ergibt sich die Möglichkeit, gleichartige Filtereinsätze in unterschiedliche Filtergehäuse mit unterschiedlich positionierten Trennebenen einzusetzen. Durch axiales Verschieben kann die Dichtung in verschiedene Montagepositionen gebracht werden. Dabei kommt es auf die Einbaurichtung des Filterelementes nicht an. Zur Vereinfachung der Handhabung kann der Benutzer das Filterelement in beliebiger Richtung in das Gehäuse einführen, wobei die Dichtung in die geeignete Axialposition verschoben wird.

Aus der DE 20 2006 018335 U1 ist ein Filtersystem bekannt, das ein aus zwei Gehäusehälften bestehendes Gehäuse aufweist, in dem ein Filterelement aufgenommen ist. Das Gehäuse wird durch eine zwischen den Gehäusehälften aufgenommene Dichtung nach außen hin abgedichtet. Die Dichtung ist auf einen Dichtungsträger, der dem Filterelement zugeordnet ist, aufgezogen.
Aus der DE 20 2006 018334 U1 ist ein ähnliches Filtersystem bekannt, dessen Dichtungsträger an einer Endscheibe des Filterelements vorliegt.
Ferner betrifft US 2002/158006 A1 eine Filtervorrichtung, bei der der Dichtungsträger lose zwischen den Gehäuseteilen vorliegt und gegenüber zwei Dichtstellen am Gehäusedeckel abdichtet, wobei er auf einen hülsenförmigen Fortsatz des Deckels aufgeschoben ist.
In EP 2 481 460A1 wird ein Dichtungsträger offenbart, der radial außen eine Ringdichtung trägt. Der Dichtungsträger ist über einen radial innenliegenden Befestigungsringabschnitt mit einem filterelementseitigen Verbindungsstutzen verbunden.
Schließlich wird in der US 2011/132828 A1 eine Filtervorrichtung offenbart, die auch über einen separaten Dichtungsträger verfügt. Dieser ist weder filterelementseitig noch gehäuseseitig verkuppelt, sondern stützt sich lediglich in einer Montageposition mit einem hülsenförmigen Absatz in einer Ringnut des Gehäusedeckels ab.

### Offenbarung der Erfindung

Eine Aufgabe der Erfindung ist es daher, ein Filtersystem zum Filtern eines Fluids zu schaffen, das es erlaubt, auf konstruktiv einfache und mechanisch stabile Weise ohne zusätzliche Werkzeuge eine Dichtung einzusetzen und bei einer Wartungsaktion auch zu tauschen.

Eine weitere Aufgabe der Erfindung ist es, ein Filterelement zum Einbau in ein solches Filtersystem zu schaffen, das es erlaubt, auf konstruktiv einfache und mechanisch stabile Weise ohne zusätzliche Werkzeuge eine Dichtung einzusetzen und bei einer Wartungsaktion auch zu tauschen.

Eine weitere Aufgabe der Erfindung ist es, eine Dichtungsvorrichtung zur Verwendung in einem solchen Filtersystem zu schaffen, die es erlaubt, auf konstruktiv einfache und mechanisch stabile Weise ohne zusätzliche Werkzeuge eine Dichtung einzusetzen und bei einer Wartungsaktion auch zu tauschen.

Die vorgenannten Aufgaben werden nach einem Aspekt der Erfindung gelöst von einem Filtersystem, das eine zwischen einem ersten Gehäuseteil und einem zweiten Gehäuseteil angeordnete Dichtungsvorrichtung zur Abdichtung eines Gehäuseinnenraums gegen eine Umgebung umfasst, wobei die Dichtungsvorrichtung eine an einem Dichtungsträger angeordnete Dichtung aufweist.

Günstige Ausgestaltungen und Vorteile der Erfindung ergeben sich aus den weiteren Ansprüchen, der Beschreibung und der Zeichnung.

Es wird ein Filtersystem zum Filtern eines Fluids vorgeschlagen, das ein Filterelement, ein Filtergehäuse, welches ein erstes Gehäuseteil und ein zweites Gehäuseteil umfasst, in welchem das Filterelement angeordnet ist, sowie eine zwischen dem ersten Gehäuseteil und dem zweiten Gehäuseteil angeordnete Dichtungsvorrichtung zur Abdichtung eines Gehäuseinnenraums gegen eine Umgebung umfasst. Die Dichtungsvorrichtung weist dabei eine an einem Dichtungsträger angeordnete Dichtung auf. Dabei liegt die Dichtung mit wenigstens einer radial innen liegenden Innenfläche an einer radial außenliegenden Anlageseite des Dichtungsträgers an und ist von der Anlageseite radial nach innen abgestützt, wobei der Dichtungsträger Kupplungselemente zur Verbindung mit dem ersten Gehäuseteil und/oder dem zweiten Gehäuseteil aufweist.

Das erfindungsgemäße Filtersystem weist eine Dichtungsvorrichtung auf, welche eine Dichtung, beispielsweise eine Rundschnur oder eine Endlosdichtung mit beliebigem Querschnitt, auf einem Dichtungsträger, der aus einem harten und formstabilen Kunststoff gebildet sein kann, umfasst. Dichtung und Dichtungsträger sind bevorzugt aus unterschiedlich elastischen Werkstoffen hergestellt sein, wodurch eine Funktionstrennung von Dichten und Abstützen dargestellt wird. Die Dichtung kann über wenigstens eine Haltekontur zur Fixierung an dem Dichtungsträger verfügen, so dass sie über die Haltekontur für die Montage/Demontage stabil und servicefreundlich auf dem Dichtungsträger gehalten werden kann. Der Dichtungsträger dient so als Montage- und Demontagehilfe. Über die Dichtungsvorrichtung wird eine Schnittstelle zwischen einem ersten Gehäuseteil und einem zweiten Gehäuseteil des Filtergehäuses gegen die Umgebung abgedichtet, wobei die Schnittstelle mit der Dichtungsvorrichtung nicht mit einer Schnittstelle zum Verschrauben oder Verklipsen zusammenfallen muss. Die beiden Schnittstellen können auch axial räumlich getrennt sein, was sogar ein wesentlicher Vorteil für die Stabilität der Abdichtung des Filtergehäuses sein kann. Die Funktionen des mechanischen Verschließens des Filtergehäuses und der Abdichtung sind so voneinander getrennt.

Die Dichtungsvorrichtung kann Laschen aufweisen, die ein leichtes Wechseln der Dichtung ermöglichen. Weiter kann die Dichtungsvorrichtung über Kupplungselemente mit einem der beiden Gehäuseteile, vorzugsweise dem Deckel oder oben liegenden Gehäuseteil bei stehender Montage, verbunden sein, was bei einem servicefreundlichen Wartungsvorgang von Vorteil ist, da die Dichtung im abgeschraubten Deckel des Filtergehäuses verbleibt. Die Kupplungselemente weisen Schnapp- oder Verrastungselemente auf, die auch akustisch eine ordnungsgemäße Montage signalisieren. Der Dichtungsträger stellt einen stabilen Rahmen als Versteifungselement für die Dichtung dar. Deshalb weist der Dichtungsträger auch eine andere Elastizität als die Dichtung auf und ist bevorzugt aus starrem Material ausgeführt. Dadurch ist eine axiale Stabilität der Dichtung beim Fügen, bei Transport und Verpackung, bei Montage gewährleistet, da es so keine Verdrillung der Dichtung in der Verpackung sowie kein Schlupf beim Verschrauben des Filtersystems bei schlechter Benetzung mit dem Fluid auftreten kann. Als Serviceteile können durch die Dichtungsvorrichtung Dichtung und Filterelement zusammengehalten werden. Außerdem ist ein so genannter "Poka Yoke"-Effekt bei der Montage in Erstausstattung und Wartungsarbeiten gegeben, da die Dichtungsvorrichtung symmetrisch aufgebaut ist und in beiden möglichen Einbaurichtungen eingebaut werden kann. Ferner kann auf eine Lasche an der Dichtung verzichtet werden, welche zum Entfernen der Dichtung zwar hilfreich sein kann, jedoch bei der Montage als störendes Element beim Einsetzen der Dichtungsvorrichtung in eine Nut des Filtergehäuses hinderlich sein könnte. Vielmehr sind die an dem Dichtungsträger angeordneten Kupplungselemente jetzt als Laschen verwendbar, so dass der Dichtungsträger zusammen mit der Dichtung durch Ziehen an den Kupplungselementen, beispielsweise mit einer Zange, aus dem Filtergehäuse entnommen werden kann.

Die Dichtungsvorrichtung weist mehrere Vorteile auf: Sie kann als Montagehilfe dienen. Sie weist einen inhärenten Stützring durch den Dichtungsträger auf. Sie dient als Entnahmehilfe bei Servicearbeiten. Sie stellt eine intrinsische Stabilisierung der Dichtung dar. Durch den Dichtungsträger kann die Dichtung in einer alternativen Ausgestaltung mit dem Filterelement verbunden sein.

Vorteilhaft kann die Dichtung im eingebauten Zustand bei geschlossenem Filtergehäuse axial und radial verpresst sein. Die Dichtung wird durch die axiale Annäherung der beiden Gehäuseteile zunächst axial verpresst, während schräg zur Längsachse angeordnete Dichtflächen der Dichtung gleichzeitig radial nach innen gedrückt werden und damit eine radiale Verpressung der Dichtung bewirken, da die Dichtung sich dabei gleichmäßig mit einer Innenfläche an ihre Gegenfläche, eine Anlageseite des Dichtungsträgers, anlegen kann und von dem Dichtungsträger radial nach außen abgestützt wird. So erhält man ein selbstverstärkendes Dichtungssystem, das keine weitere mechanische Verpressung benötigt. Die Dichtungsvorrichtung dient dabei beim Verschließen des Filtergehäuses nicht als Anschlag. Vielmehr wird zweckmäßigerweise am Filtergehäuse, das beispielsweise mittels eines Schraubgewindes verschlossen wird, ein mechanischer Anschlag vorgesehen, so dass die Verschraubung nur so weit erfolgen kann, bis die beiden Gehäuseteile an dem Anschlag anliegen. Die Dichtung kann so nur auf eine genau definierte Weise bis zu einem gewissen Grad verpresst werden, dass eine zuverlässige und dauerhafte Dichtfunktion gewährleistet ist. Die Dichtung befindet sich so in einem Gleichgewichtszustand.

Auch zentriert sich die Dichtung bei der Montage im ersten Gehäuseteil und bei Schließen des Filtergehäuses durch das zweite Gehäuseteil selbst. Gerade beim Einsatz als Ölfilter einer Brennkraftmaschine in einem Kraftfahrzeug, bei dem der Gehäuseinnenraum druckbeaufschlagt ist und wo die Dichtung bei Temperaturen von -40°C bis zu 150°C mit Drücken bis zu 4,5 bar, in Spitzen bis zu 25 bar, zuverlässig arbeiten sollte, ist ein solches selbstzentrierendes Dichtungssystem von großem Vorteil, da auch bei einem mechanischen Pumpen des Filtergehäuses aufgrund wechselnder Druckverhältnisse die Dichtfunktion erhalten und gewährleistet bleibt.

In einer vorteilhaften Ausgestaltung kann die Dichtung zwischen dem ersten Gehäuseteil, dem zweiten Gehäuseteil und dem Dichtungsträger gekammert sein. Die Kammerung wird günstigerweise bewirkt durch eine an einer Bauteildichtfläche des ersten Gehäuseteils anliegende Dichtfläche, eine an einer Bauteildichtfläche des zweiten Gehäuseteils anliegende Dichtfläche sowie eine an der Anlageseite des Dichtungsträgers anliegende Innenfläche der Dichtung, wobei die Dichtung im eingebauten Zustand in einer aus der Bauteildichtfläche und einer Innenwandung gebildeten Dichtungsnut angeordnet ist.

Günstigerweise kann die Dichtung in axialer Richtung aus einer Dichtungsnut des ersten und/oder zweiten Gehäuseteils herausragen. Insbesondere kann die Dichtung im verpressten Zustand aus einer Dichtungsnut des ersten und/oder zweiten Gehäuseteils herausragen. Die Innenwandung der Dichtungsnut überdeckt auf diese Weise eine axiale Ausdehnung der Dichtung höchstens zur Hälfte, vorzugsweise höchstens zu einem Drittel. Weiter erstreckt sich so die Nuttiefe der Dichtungsnut nur teilweise über eine Bauteildichtfläche am gleichen Gehäuseteil. Insbesondere im dichtenden, also verpressten, Zustand der Dichtung ragt die Dichtung in axialer Richtung aus einer Dichtungsnut hervor. Vorteilhaft ragt die Dichtung wenigstens 50%, insbesondere 70% und ganz besonders vorteilhaft 80% ihrer axialen Ausdehnung in verpresstem Zustand aus der Dichtungsnut hervor. Auf diese Weise ist eine zuverlässige und dauerhafte Abdichtungsfunktion der Dichtungsvorrichtung gewährleistet. Typischerweise sollte ca. ein Viertel der axialen Ausdehnung der Dichtung zur Verpressung der Dichtung verfügbar sein.

Gemäß einer vorteilhaften Ausgestaltung kann die Dichtung ein Basisteil und wenigstens einen axialen Überstand aufweisen, wobei das Basisteil über seine radial innenliegende Innenfläche an der radial außenliegenden Anlageseite des Dichtungsträgers anliegt und zumindest im verpressten Zustand von der Anlageseite radial nach innen abgestützt ist. Die Innenfläche weist dabei im verpressten Zustand günstigerweise eine axiale Ausdehnung von wenigstens 50% der axialen Ausdehnung der Dichtung auf. Auf diese Weise sind die beiden Funktionen Abstützen der Dichtung in radialer Richtung und Ausüben der eigentlichen Dichtfunktion in voneinander getrennten Bauelementen realisiert. Alle radialen Kräfte auf die Dichtung können so über den Dichtungsträger abgefangen werden.

Gemäß einer weiteren günstigen Ausgestaltung kann dabei der wenigstens eine axiale Überstand zur Anlage an einer Bauteildichtfläche des ersten Gehäuseteils oder an einer Bauteildichtfläche des zweiten Gehäuseteils vorgesehen sein. Der axiale Überstand kann so günstig für das Ausüben einer Dichtfunktion zusammen mit der Bauteildichtfläche gestaltet werden. Die radiale Abstützfunktion der Dichtung kann separat umgesetzt werden.

Vorteilhaft kann sich die gehäuseseitige Dichtungslinie in axialer Richtung gesehen im Bereich des Filterbalgs befinden und ist damit axial deutlich von den Endscheiben beabstandet.

In einer vorteilhaften Ausgestaltung kann eine Bauteildichtfläche des einen Gehäuseteils in axialer Richtung außerhalb der Dichtungsnut des anderen Gehäusebauteils angeordnet sein, was eine größere Gestaltungsfreiheit in der Anbringung der Dichtungsnut in einem der beiden Gehäuseteile erlaubt.

Zweckmäßigerweise kann eine Ausdehnung der Dichtung, insbesondere in verpresstem Zustand, in axialer Richtung größer als eine Ausdehnung der Dichtung in radialer Richtung sein. Diese Ausgestaltung ist von Vorteil, da dadurch die Dichtung in axialer Richtung beim Zusammenschrauben der beiden Gehäuseteile des Filtergehäuses einen größeren Verpressweg aufnehmen kann als in radialer Richtung, was gerade bei der Verwendung eines Schraubgewindes günstig ist. Günstigerweise weist die Dichtung so auch in verpresstem Zustand eine größere axiale Ausdehnung als eine radiale Ausdehnung auf.

Vorteilhaft kann die Dichtungsvorrichtung als Einbauteil im Gehäuse angeordnet sein. Die Dichtungsvorrichtung ist so als Ganzes leicht und zuverlässig zu montieren. Das Risiko einer Beschädigung der Dichtung bei Transport und Montage wird so minimiert.

Günstigerweise kann die Dichtungsvorrichtung an einem der beiden Gehäuseteile fixiert sein. Eine solche Anbringung ist günstig sowohl für die Montage des Filtergehäuses als auch beim Öffnen und Wiederverschließen der beiden Gehäuseteile, da die Dichtung nicht verloren geht und so auch beschädigungssicher eine neue Dichtung wieder montiert werden kann.

In einer vorteilhaften Ausgestaltung kann eines der Gehäuseteile zum Abnehmen vom anderen der Gehäuseteile ausgebildet sein und der Dichtungsträger an dem abnehmbaren der beiden Gehäuseteile befestigt sein. Die Ausgestaltung eines der Gehäuseteile als abnehmbaren Deckel begünstigt die Anbringung des Dichtungsträgers an diesem Deckel, um so auch die Dichtung zuverlässig und beschädigungssicher montieren und wieder entnehmen zu können.

Erfindungsgemäß greifen die Kupplungselemente in eine Kupplungsaufnahme auf einer Innenseite des ersten Gehäuseteils und/oder des zweiten Gehäuseteils ein. Die Kupplungsaufnahme kann dabei bevorzugt nutförmig ausgebildet sein, um so eine zuverlässige Verbindung zwischen Kupplungselement und Kupplungsaufnahme zu erreichen. Insbesondere können die dabei Kupplungselemente eine Verrastung des Dichtungsträgers mit dem ersten Gehäuseteil und/oder dem zweiten Gehäuseteil aufweisen. Dadurch kann die Dichtungsvorrichtung mit dem zweiten Gehäuseteil, beispielsweise dem Deckel des Filtergehäuses, verbunden werden, so dass die Dichtung beispielsweise bei Entfernen des Deckels zum Wechsel des Filterelements mit dem Deckel zusammen entfernt werden kann und das Risiko von Verschmutzung und Beschädigung der Dichtung mindert. Weiter sind bessere Zugänglichkeit der Dichtung sowie leichtere Wartung dabei von Vorteil. Durch das Zusammenwirken von Kupplungselement und Kupplungsaufnahme kann außerdem eine axiale Positionierung der Dichtungsvorrichtung in dem Filtergehäuse, also dem ersten und/oder dem zweiten Gehäuseteil bewirkt werden.

Durch eine Verrastung lässt sich der Dichtungsträger auf einfache Weise ohne zusätzliches Werkzeug mit dem zweiten Gehäuseteil, beispielsweise dem Deckel, verbinden und bleibt auch bei Entfernen des zweiten Gehäuseteils von dem ersten Gehäuseteil mit diesem verbunden. Durch die Verrastung ist auch eine akustische und haptische Kontrolle des Montagevorgangs ermöglicht, was aus Qualitätsgründen ein großer Vorteil bei einem solch wichtigen Bauteil für die Funktion des Filtersystems darstellt.

In einer vorteilhaften Ausgestaltung ist es günstig, wenn die Dichtung an jedem der beiden Gehäuseteile nur eine Dichtfläche aufweist. Damit ist eine zuverlässige Dichtwirkung bei der Montage des Filtergehäuses gegeben, wobei auch die Gefahr der Beschädigung einer Dichtfläche der Dichtung bei der Montage auf diese Weise minimiert wird.

Zweckmäßigerweise kann der Dichtungsträger im eingebauten Zustand in axialer Richtung an einer Anlagefläche eines der Bauteile anliegen und in seiner axialen Position fixiert sein. Durch das Zusammenwirken von Kupplungselement und Kupplungsaufnahme kann so eine axiale Positionierung der Dichtungsvorrichtung bewirkt werden. Dadurch ist eine Positionierung einer Dichtfläche der Dichtung zu dieser Anlagefläche als Dichtfläche des Bauteils günstig erreicht. Das Risiko, dass eine Dichtfläche bei der Montage beschädigt wird, ist auf diese Weise minimiert.

In einer günstigen Ausgestaltung können die beiden Dichtflächen wenigstens abschnittsweise geneigt zu einer Längsachse der Dichtungsvorrichtung verlaufen. Bevorzugt weisen die beiden Dichtflächen im nicht gepressten Zustand eine (gleichförmige) Krümmung zur Längsachse auf. Eine solche Neigung zu einer Längsachse der Dichtungsvorrichtung bewirkt beim Schließen des Filtergehäuse beispielsweise durch Verschrauben der beiden Gehäuseteile, dass die Dichtung sowohl axial als auch radial verpresst wird und erhöht so die Zuverlässigkeit der Abdichtung des Filtergehäuses zur Umgebung.

Bevorzugt können die Dichtung und der Dichtungsträger spiegelsymmetrisch zu einer axialen Mitte der Dichtungsvorrichtung ausgebildet sein, so dass die Dichtungsvorrichtung in beiden Orientierungen verbaut werden kann, was die Montagefreundlichkeit erhöht.

Vorteilhaft können die wenigstens eine Haltekontur der Dichtung ein oder mehrere Rastelemente aufweisen, welche in entsprechende Aussparungen des Dichtungsträgers eingreifen. Damit kann gewährleistet werden, dass die Dichtung dauerhaft mit dem Dichtungsträger verbunden bleibt und sowohl bei Transport als auch bei der Montage und im Wartungseinsatz dauerhaft verbunden bleibt, was die Montage sehr erleichtert sowie das Risiko einer Verschmutzung und/oder Beschädigung der Dichtung bei Transport und Montage minimieren kann. In einer zweckmäßigen Ausgestaltung kann die wenigstens eine Haltekontur eine formschlüssige Verbindung mit dem Dichtungsträger aufweisen. Es ist möglich, dass die Dichtung auf den Dichtungsträger aufgespritzt wird, so dass eine feste, dauerhafte, formschlüssige Verbindung von Dichtung und Dichtungsträger gewährleistet werden kann. Alternativ können Dichtung und Dichtungsträger als Zweikomponentenbauteil in einem Kunststoff-Spritzgussprozess hergestellt werden, so dass auch hierüber eine dauerhafte und formschlüssige Verbindung in günstiger Weise hergestellt werden kann. Dazuhin stellt eine solche Herstellungsweise einen sehr schnellen und kostengünstigen Prozess dar. In einer weiteren Alternative kann die Dichtung mit einem mittigen, radial innenliegenden Wulst, der für die Montage aufgeweitet wird, in eine mittige, radial außenliegende Nut des Dichtungsträgers eingesetzt werden. Auf diese Weise ist die Dichtung fest auf dem Dichtungsträger fixiert und kann bei der Montage sowie beim Schließen des Filtergehäuses nicht verrutschen oder auf andere Weise die Position verändern.

Eine solche Anordnung stellt in günstiger Weise sowohl eine axiale als auch eine radiale Abdichtung sicher, da die beiden schräg zueinander angeordneten Dichtungsflächen eine axiale und eine radiale Verpressung der Dichtung erlauben. Die Dichtung sieht so ein U-förmiges Bett. Eine schräg nach oben verlaufende Dichtfläche der Dichtung liegt beispielsweise an einer Bauteildichtfläche des zweiten Gehäuseteils an, während eine schräg nach unten verlaufende Dichtfläche der Dichtung an einer Bauteildichtfläche des ersten Gehäuseteils anliegen kann. Beim Verschließen der beiden Gehäuseteile wird die Dichtung an die beiden Bauteildichtflächen angepresst und dichtet so zuverlässig den Gehäuseinnenraum gegen die Umgebung ab.

In einer weiteren günstigen Ausgestaltung ist es auch denkbar, die Dichtungsvorrichtung mit dem Filterelement zu verbinden, so dass die Dichtungsvorrichtung zusammen mit diesem Filterelement transportiert, gelagert, und montiert werden kann, und damit keine Verwechslung der Dichtungsvorrichtung möglich ist. Weiter ist eine sichere Montage und Demontage der Dichtungsvorrichtung in dieser Alternative mit dem Filterelement zusammen möglich. Dadurch kann gewährleistet werden, dass der Wechsel der Dichtung auch mit dem Wechsel des Filterelements zusammen geschieht.
Nach einem weiteren Aspekt betrifft die Erfindung eine Dichtungsvorrichtung zum Einbau in ein oben beschriebenes Filtersystem, das eine an einem Dichtungsträger angeordnete Dichtung umfasst. Dabei liegt die Dichtung mit einer radial innenliegenden Innenfläche an einer radial außenliegenden Anlageseite des Dichtungsträgers an und wird von der Anlageseite radial nach innen abgestützt, wobei der Dichtungsträger wenigstens ein Kupplungselement zur Verbindung mit dem ersten Gehäuseteil und/oder dem zweiten Gehäuseteil aufweist.

Die Dichtungsvorrichtung umfasst eine Dichtung, beispielsweise eine Rundschnur oder eine Endlosdichtung mit beliebigem Querschnitt, auf einem Dichtungsträger, der aus einem harten und formstabilen Kunststoff gebildet sein kann. Die Dichtung kann über eine Haltekontur für die Montage/Demontage stabil und servicefreundlich auf dem Dichtungsträger gehalten werden. Der Dichtungsträger dient so als Montage- und Demontagehilfe. Über die Dichtungsvorrichtung wird eine Schnittstelle zwischen einem ersten Gehäuseteil und einem zweiten Gehäuseteil des Filtergehäuses gegen die Umgebung abgedichtet, wobei die Schnittstelle mit der Dichtungsvorrichtung nicht mit einer Schnittstelle zum Verschrauben oder Verklipsen zusammenfallen muss. Die beiden Schnittstellen können auch axial räumlich getrennt sein, was sogar ein wesentlicher Vorteil für die Stabilität der Abdichtung des Filtergehäuses sein kann. Die Dichtungsvorrichtung kann Laschen aufweisen, die ein leichtes Wechseln der Dichtung ermöglichen.

Weiter kann die Dichtungsvorrichtung über Kupplungselemente mit einem der beiden Gehäuseteile, vorzugsweise dem Deckel oder oben liegenden Gehäuseteil bei stehender Montage, verbunden sein, was bei einem servicefreundlichen Wartungsvorgang von Vorteil ist, da die Dichtung im abgeschraubten Deckel des Filtergehäuses verbleibt. Die Kupplungselemente weisen Schnapp- oder Verrastungselemente auf, die auch akustisch eine ordnungsgemäße Montage signalisieren. Der Dichtungsträger stellt einen stabilen Rahmen für die Dichtung dar. Dadurch ist eine axiale Stabilität der Dichtung beim Fügen, bei Transport und Verpackung, bei Montage gewährleistet, da es so keine Verdrillung in der Verpackung sowie kein Schlupf beim Verschrauben des Filtersystems bei schlechter Befeuchtung mit dem Fluid auftreten kann. Als Serviceteile können durch die Dichtungsvorrichtung Dichtung und Filterelement zusammengehalten werden. Außerdem ist ein Poka Yoke Effekt bei der Montage in Erstausstattung und Wartungsarbeiten gegeben. Es gibt auch keine Lasche, welche bei der Montage als störendes Element beim Einsetzen der Dichtungsvorrichtung in eine Nut des Filtergehäuses hinderlich sein könnte, da die Dichtung in der Dichtnut stabilisiert wird.

Die Dichtungsvorrichtung weist so folgende Vorteile auf: Sie kann als Montagehilfe dienen. Sie weist einen inhärenten Stützring durch den Dichtungsträger auf. Sie dient als Entnahmehilfe bei Servicearbeiten. Sie stellt eine intrinsische Stabilisierung der Dichtung dar. Durch den Dichtungsträger kann die Dichtung auch mit dem Filterelement verbunden sein.

Nach einem weiteren Aspekt betrifft die Erfindung eine Anordnung aus einem Filterelement, das mindestens eine Endscheibe und einen Filterbalg umfasst, und einer oben beschriebenen Dichtungsvorrichtung, wobei ein Dichtungsträger der Dichtungsvorrichtung an einem radialen Außenumfang des Filterelements angeordnet ist. Ein solches Filterelement kann so zusammen mit der Dichtungsvorrichtung gelagert, transportiert, montiert, demontiert werden. Dadurch ist eine Verwechslung der geeigneten Dichtung für das Filtersystem minimiert. Weiter lässt sich so eine Verschmutzung und/oder Beschädigung der Dichtung bei Transport und Montage leichter ausschließen.

Vorteilhaft kann die Anordnung aus einem Filterelement und einer Dichtungsvorrichtung so ausgestaltet sein, dass die Dichtungsvorrichtung eine an dem Dichtungsträger angeordnete gemeinsame Dichtung zur Abdichtung von Reinseite gegen Rohseite des Filterelements und/oder einem ersten Gehäuseteil und einem zweiten Gehäuseteil des Filtersystems gegen eine Umgebung aufweist. Eine solche Ausgestaltung kann realisiert werden dadurch, dass der Dichtungsträger fluiddicht mit dem Filterelement abschließt. Der Vorteil einer gemeinsamen Dichtung besteht nicht nur darin, dass ein Bauteil eingespart werden kann, sondern auch darin, dass die Abdichtung zuverlässiger funktionieren kann, da eben nur an einer Stelle abgedichtet wird, wo die Dichtung verpresst wird. So kann die Dichtung günstig als eine Einheit an dem Filterelement angeordnet sein.

Bevorzugt betrifft die Erfindung die Verwendung des Filtersystems als Öl- oder Kraftstofffilter. Bei diesen Fluidfiltern ist üblicherweise ein Austausch des Filterelements nach einer vorgegebenen Laufleistung nötig, so dass das Filtersystem in regelmäßigen Abständen geöffnet und das Filterelement entnommen, sowie ein neues Filterelement eingesetzt werden muss. Mit der erfindungsgemäßen Dichtungsvorrichtung ist es in vorteilhafter Weise möglich, die Dichtung zuverlässig und wartungsfreundlich zu tauschen. Eine dauerhafte Abdichtung des Filtersystems nach dem Wechsel des Filterelements ist damit in vorteilhafter Weise möglich. Da Filterelement und Dichtung zweckmäßigerweise in einer Serviceeinheit gelagert und für den Wartungsfall bereitgestellt werden, ist auch gewährleistet, dass die richtige Dichtung beim Wechsel des Filterelements verwendet wird.

### Kurze Beschreibung der Zeichnungen

Weitere Vorteile ergeben sich aus der folgenden Zeichnungsbeschreibung. In den Zeichnungen sind Ausführungsbeispiele der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

### Es zeigen beispielhaft:

- Fig. 1: eine Schnittdarstellung einer schematisch dargestellten Verbindungsstelle eines Filtergehäuses mit Fokus auf die Abdichtung des Filtergehäuses, dargestellt mit eingesetzter Dichtungsvorrichtung nach einem Ausführungsbeispiel der Erfindung;
- Fig. 2: eine isometrische Schnittdarstellung eines Teils des Filtergehäuses mit eingesetzter Dichtungsvorrichtung nach Fig. 1;
- Fig. 3: eine Explosionsdarstellung eines Teils des Filtergehäuses mit Dichtungsvorrichtung nach Fig. 1;
- Fig. 4: eine Schnittdarstellung eines Filtersystems, nach einem weiteren Ausführungsbeispiel der Erfindung;
- Fig. 5: eine isometrische Explosionsdarstellung eines Teils des Filtersystems nach Fig. 4, dargestellt sind das zweite Gehäuseteil in Form eines Deckels mit Dichtungsvorrichtung; und
- Fig. 6: eine Schnittdarstellung durch einen Teil eines Filtersystems nach Figur 4 mit Fokus auf die montierte Dichtungsvorrichtung.

### Ausführungsformen der Erfindung

In den Figuren sind gleiche oder gleichartige Komponenten mit gleichen Bezugszeichen beziffert. Die Figuren zeigen lediglich Beispiele und sind nicht beschränkend zu verstehen.

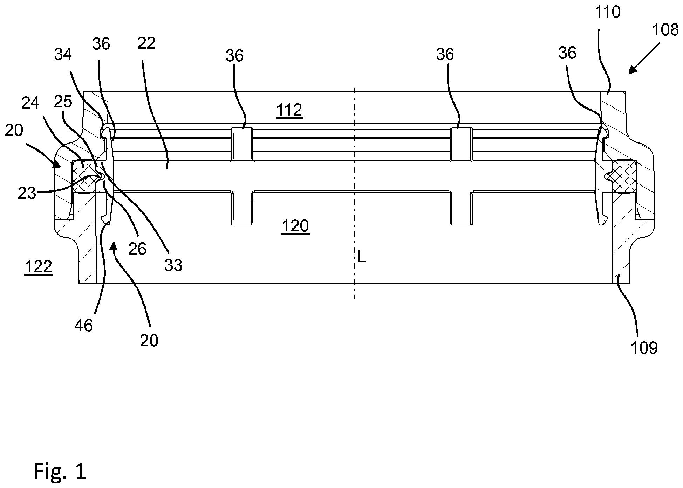

Figur 1 zeigt eine Schnittdarstellung einer schematisch dargestellten Verbindungsstelle eines Filtergehäuses 108 mit Fokus auf die Abdichtung des Filtergehäuses, dargestellt mit eingesetzter Dichtungsvorrichtung 20 nach einem Ausführungsbeispiel der Erfindung.

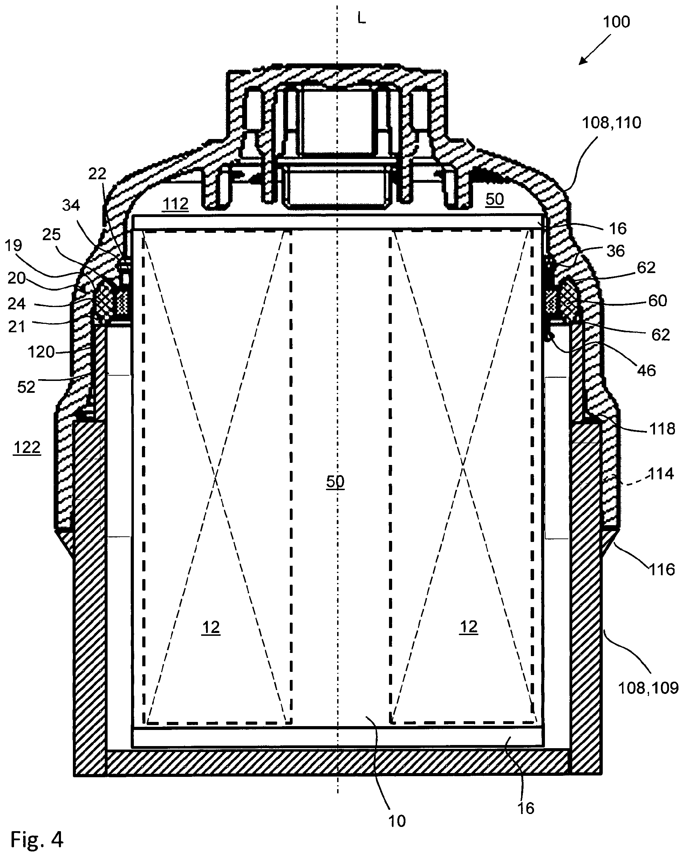

Das erfindungsgemäße Filtersystem 100 zum Filtern eines Fluids umfasst ein (in Figur 4 dargestelltes) Filterelement 10, ein Filtergehäuse 108, das ein erstes Gehäuseteil 109 und ein zweites Gehäuseteil 110 umfasst, in welchem das Filterelement 10 angeordnet ist, sowie eine zwischen dem ersten Gehäuseteil 109 und dem zweiten Gehäuseteil 110 angeordnete Dichtungsvorrichtung 20 zur Abdichtung eines Gehäuseinnenraums 120 gegen eine Umgebung 122, wobei die Dichtungsvorrichtung 20 eine an einem Dichtungsträger 22 angeordnete Dichtung 24 aufweist. Dabei liegt die Dichtung 24 mit wenigstens einer radial innenliegenden Innenfläche 18 an einer radial außenliegenden Anlageseite 25 des Dichtungsträgers 22 an und ist von der Anlageseite 25 radial nach innen abgestützt. Die Dichtung 24 weist eine Haltekontur 23 zur Fixierung der Dichtung 24 an dem Dichtungsträger 22 auf. Der Dichtungsträger 22 weist mehrere Kupplungselements 36 zur Verbindung mit dem zweiten Gehäuseteil 110 auf. Bevorzugt können die Dichtung 24 und der Dichtungsträger 22 spiegelsymmetrisch zu einer axialen Mitte der Dichtungsvorrichtung 20 ausgebildet sein, so dass die Dichtungsvorrichtung 20 in beiden Orientierungen verbaut werden kann, was die Montagefreundlichkeit erhöht.

Ein Filterelement 10 ist in Figur 1 aus Übersichtlichkeitsgründen nicht dargestellt. Dargestellt ist dagegen ein Teil eines ersten Gehäuseteils 109, der über die Dichtungsvorrichtung 20 mit einem zweiten Gehäuseteil 110 verbunden und abgedichtet ist. Dabei greifen mehrere Kupplungselemente 36 in eine nutförmige Kupplungsaufnahme 34 auf einer Innenseite 112 des zweiten Gehäuseteils 110 ein. Die Dichtungsvorrichtung 20 ist so an dem Gehäuseteil 110 fixiert. Das Gehäuseteil 110 ist zum Abnehmen vom anderen Gehäuseteil 109 ausgebildet und der Dichtungsträger 22 ist an dem abnehmbaren der beiden Gehäuseteile 109, 110 befestigt.

Die Kupplungselemente 36 weisen günstigerweise eine Verrastung des Dichtungsträgers 22 mit dem zweiten Gehäuseteil 110 auf, die sowohl akustisch durch ein Klicken als auch haptisch eine ordnungsgemäße Montage des Dichtungsträgers 20 mit dem zweiten Gehäuseteil 110 vermitteln kann. Da die Dichtungsvorrichtung 20 spiegelsymmetrisch aufgebaut ist, könnte sie auch in einer anderen Orientierung verbaut werden, so dass die Kupplungselemente 46 in die Kupplungsaufnahme 34 greifen können. Alternativ könnte die Kupplungsaufnahme 34 auch im ersten Gehäuseteil 109 angeordnet sein.

Ist die Dichtungsvorrichtung 20 über die Kupplungselemente 36 mit dem zweiten Gehäuseteil 110 verrastet und wird mit diesem Gehäuseteil 110 entnommen, so kann die Dichtungsvorrichtung 20 über die Kupplungselemente 46 aus dem Gehäuseteil 110 abgezogen werden. Bei einer Verrastung der Kupplungselemente 46 in einem Gehäuseteil 109 kann die Dichtungsvorrichtung dann über die frei liegenden Kupplungselemente 36 von dem Gehäuseteil 109 abgezogen werden.

Die Dichtung 24 ist im eingebauten Zustand bei geschlossenem Filtergehäuse 108 axial und radial verpresst, da die Dichtung 24 in diesem Ausführungsbeispiel zwischen dem ersten Gehäuseteil 109, dem zweiten Gehäuseteil 110 und dem Dichtungsträger 22 gekammert ist.

Die Dichtungsvorrichtung 20 ist bei dem in Figur 1 dargestellten Ausführungsbeispiel als Einbauteil im Gehäuse 108 angeordnet. Der Dichtungsträger 22 liegt im eingebauten Zustand in axialer Richtung an einer Anlagefläche 33 des Gehäuseteils 110 an und ist in seiner axialen Position fixiert. Auf diese Weise ist gewährleistet, dass die Dichtung 24 beim Zusammenbau der beiden Gehäuseteile 109, 110 in der richtigen Position fixiert ist und bei dem Zusammenbau nicht herausfällt oder falsch positioniert beschädigt werden kann. Dichtungsträger 22 und Dichtung 24 sollten jedoch noch so viel Spiel in ihrer Position haben, dass sie sich beim Verschließen des Filtergehäuses 108 noch soweit bewegen können, dass die Dichtung 24 sich in einer günstigen Position an die Dichtflächen 19, 21 der beiden Gehäuseteile 109, 110 anlegen kann und so eine zuverlässige Dichtfunktion gewährleistet wird. Der Dichtungsträger 22 kann kraftfrei an einem der beiden Gehäuseteile 109, 110 anliegen, ohne die Vorzentrierung der Dichtung 24 zu beeinflussen. Deswegen ist ein geringes Spiel des Dichtungsträgers 22 in seiner Montageposition von typischerweise höchstens 5/10 mm günstig.

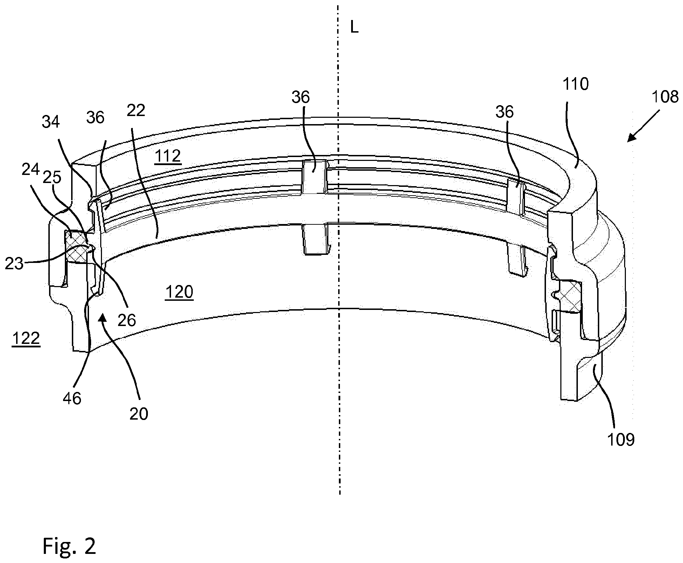

In Figur 2 ist eine isometrische Schnittdarstellung eines Teils des Filtergehäuses 108 mit eingesetzter Dichtungsvorrichtung 20 nach Figur 1 zu sehen. Dabei ist die räumliche Ausdehnung der Dichtungsvorrichtung 20, welche den auf der Innenseite 112 des zweiten Gehäuseteils 110 in die nutförmige Kupplungsaufnahme 34 mit den Kupplungselementen 36 eingreift, zu sehen. Der Dichtungsträger ist dabei als ein stabiler Ring ausgebildet, der die Dichtung 24 trägt, die mit der Haltekontur 23 in der Aufnahme 26 des Dichtungsträgers 22 fixiert ist. Auf diese Weise kann die Dichtung 24 bei der Montage/ Demontage der Dichtungsvorrichtung 20 bzw. des zweiten Gehäuseteils 110, an dem die Dichtungsvorrichtung 20 angeordnet ist, sich nicht verschieben oder beschädigt werden.

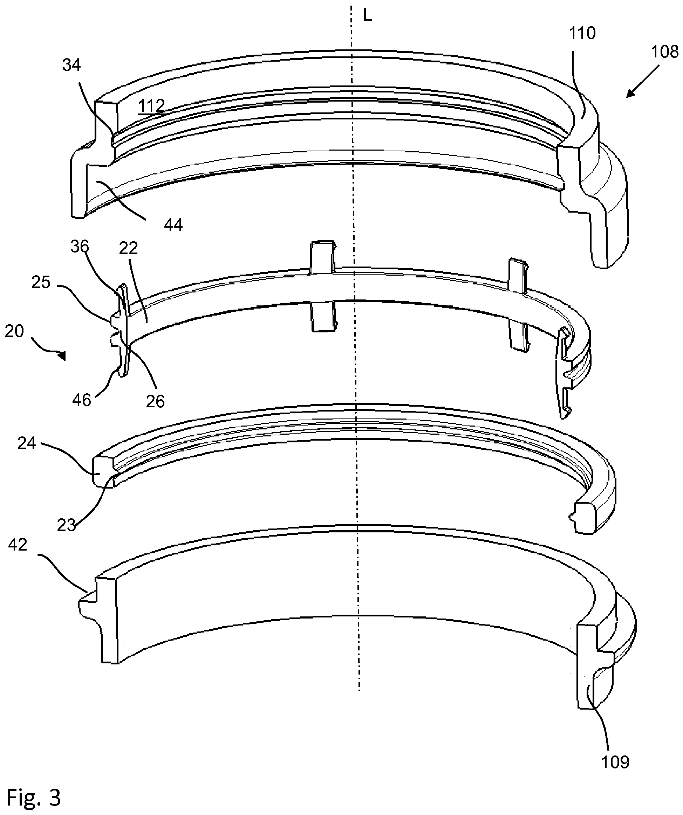

Figur 3 zeigt dazu eine Explosionsdarstellung eines Teils des Filtergehäuses 108 mit Dichtungsvorrichtung 20 nach Figur 1. So sind die einzelnen Teile des zweiten Gehäuseteils 110, des Dichtungsträgers 22, der Dichtung 24 sowie des ersten Gehäuseteils 109 mit den verbindungsrelevanten Details in ihrer Ausgestaltung zu erkennen. Die Dichtung kann mit einem mittigen, radial innenliegenden Wulst als Haltekontur 23, welche für die Montage aufgeweitet wird, in eine mittige, radial außenliegende Nut des Dichtungsträgers 22 eingesetzt werden. Auf diese Weise ist die Dichtung 24 fest auf dem Dichtungsträger 22 fixiert und kann bei der Montage sowie beim Schließen des Filtergehäuses 108 nicht verrutschen oder auf andere Weise die Position verändern.

Der Dichtungsträger 22 ist in dem gezeigten Ausführungsbeispiel spiegelsymmetrisch ausgeführt, so dass die Kupplungselemente 36 zur Verbindung mit dem zweiten Gehäuseteil 110 und die Kupplungselemente 46 zur Verbindung mit einem ersten Gehäuseteil 109 identisch ausgeführt sind. Dadurch muss bei der Montage der Dichtungsvorrichtung 20 nicht auf ihre Orientierung geachtet werden. Alternativ können die Kupplungselemente 36 und die Kupplungselemente 46 auch unterschiedlich ausgebildet sein. Wenn der Dichtungsträger 22 mit den Kupplungselementen 36 beispielsweise mit dem zweiten Gehäuseteil 110, also beispielsweise dem Deckel des Filtergehäuses 108, in Eingriff ist und demzufolge mit diesem Gehäuseteil 110 abgenommen wird, so kann die Dichtungsvorrichtung 20 über die Kupplungselemente 46 des Dichtungsträgers 22, die frei liegen, beispielsweise mittels einer Zange aus dem zweiten Gehäuseteil 110 herausgezogen und entnommen werden. Hier stellen die Kupplungselemente 46 dann einen vorteilhaften Ersatz für üblicherweise an der Dichtung 24 angeordnete Wartungslaschen dar.

Figur 4 zeigt eine Schnittdarstellung eines Filtersystems 100, nach einem weiteren Ausführungsbeispiel der Erfindung. Im Inneren eines Filtergehäuses 108 ist ein Filterelement 10, das rein schematisch dargestellt ist, angeordnet. Das Filtergehäuse 108 umfasst ein erstes Gehäuseteil 109, einen "Topf, und ein zweites Gehäuseteil 110, eine "Glocke", welche als Gehäusedeckel eingesetzt ist. Erstes Gehäuseteil 109 und Filterelement 10 sind dabei rein schematisch skizziert. Das zweite Gehäuseteil 110 ist auf das erste Gehäuseteil 109 aufgeschraubt, wobei das Schraubengewinde 114 im zusammengebauten Zustand, da auf der Gehäuseinnenseite angeordnet, nicht sichtbar ist. Das zweite Gehäuseteil 110 kann bis zu einem an der Außenseite des ersten Gehäuseteils 109 rundum laufenden Anschlag 116 aufgeschraubt und so fixiert werden. Dabei bleibt über dem Gewindebund des ersten Gehäuseteils 109 zu dem zweiten Gehäuseteil 110 eine Lücke. Der Anschlag 118 definiert so den Grad der Verpressung der Dichtung 24 zwischen dem ersten Gehäuseteil 109 und dem zweiten Gehäuseteil 110.

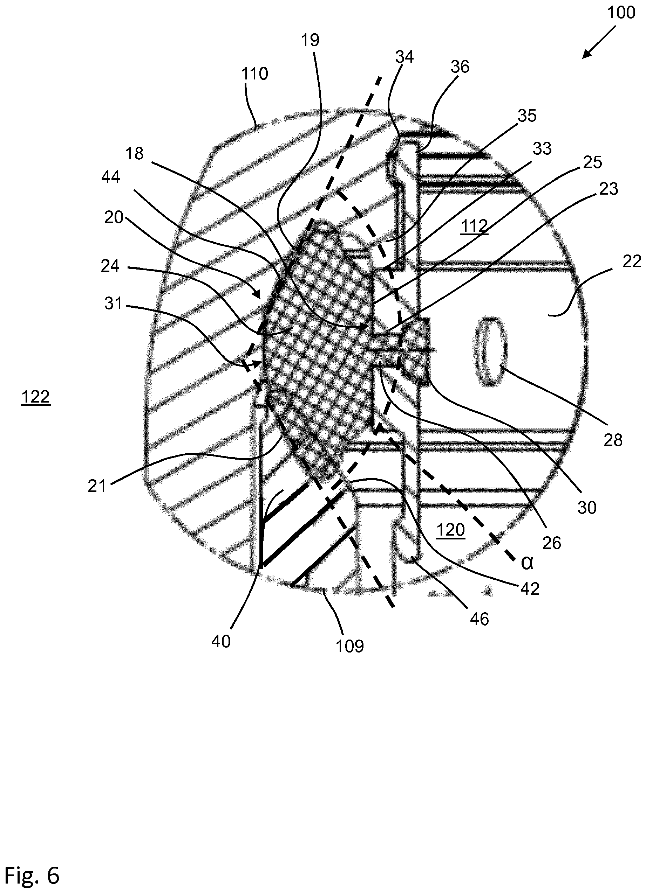

In Figur 4 ist eine anders geartete Dichtung 24 zu erkennen. Die Dichtung 24 weist ein Basisteil 60 und zwei axiale Überstande 62 auf, wobei das Basisteil 60 über die radial innenliegende Innenfläche 18 an der radial außenliegenden Anlageseite 25 des Dichtungsträgers 22 anliegt und von der Anlageseite 25 radial nach innen abgestützt ist. Dabei weist die Innenfläche 18 eine axiale Ausdehnung von ca. 50% der axialen Ausdehnung der Dichtung 24 auf. Die axialen Überstande 62 sind zur Anlage an der Bauteildichtfläche 42 des ersten Gehäuseteils 109 und an der Bauteildichtfläche 44 des zweiten Gehäuseteils 110 vorgesehen. Genauere Details der Dichtung 24 und ihrer Dichtfunktion sind in Figur 6 dargestellt.

In Figur 4 bilden das erste Gehäuseteil 109, das zweite Gehäuseteil 110 und der Dichtungsträger 22 eine Kammerung der Dichtungsvorrichtung 20, welche wenigstens zwei den Gehäuseteilen 109, 110 zugeordnete Dichtflächen 19, 21 und die Haltekontur 23 umfasst. Die Dichtung 24 weist an jedem der beiden Gehäuseteile 109, 110 nur eine Dichtfläche 19, 21 auf. Die beiden Dichtflächen 19, 21 verlaufen wenigstens abschnittsweise geneigt zu einer Längsachse L der Dichtungsvorrichtung 20. Diese Dichtung 24 mit einem halbmondförmigen oder ovalen Querschnitt ist in Figur 6 genauer dargestellt. In Figur 6 ist auch das Zusammenspiel mit dem ersten Gehäuseteil 109 genauer zu erkennen. Auch die Dichtflächen 19, 21 sind in Figur 6 dargestellt. Die erfindungsgemäße Dichtungsvorrichtung 20 weist den Vorteil auf, dass die axial/radiale Abdichtung beim Aufschrauben des Filtergehäuses 108 schnell aus dem Eingriff kommt und so gegenüber dem Stand der Technik eine schnellere Belüftung des Filtersystems 100 erfolgen kann. In einer stehenden Filtersystemanordnung ist es ausreichend, beim Öffnen des Filtersystems das zweite Gehäuseteil 110 um ca. eine halbe Gewindeumdrehung aufzuschrauben, so dass die Dichtung 24 sich löst und das im Gehäuseinnenraum 120 sich befindliche Fluid, beispielsweise Öl, restlos ablaufen kann. Nach Ablaufen des Fluids kann das zweite Gehäuseteil 110 mit der daran angeordneten Dichtungsvorrichtung 20 abgenommen werden. Alternativ kann die Dichtungsvorrichtung 20 auch an dem Filterelement 10 verbleiben und zusammen mit diesem entnommen werden.

In Figur 4 ist in dem Filtersystem 100 eine Anordnung aus einem Filterelement 10, das zwei Endscheiben 16 und einen Filterbalg 12 umfasst, und der Dichtungsvorrichtung 20 dargestellt, wobei der Dichtungsträger 22 der Dichtungsvorrichtung 20 außerhalb des radialen Außenumfangs des Filterelements 10 angeordnet ist.

In einer alternativen Ausgestaltung kann die Dichtungsvorrichtung 20 auch eine an dem Dichtungsträger 22 angeordnete gemeinsame Dichtung 24 zur Abdichtung von Reinseite 50 gegen Rohseite 52 des Filterelements 10 und/oder einem ersten Gehäuseteil 109 und einem zweiten Gehäuseteil 110 des Filtersystems 100 gegen eine Umgebung 122 aufweisen. Eine solche Ausgestaltung kann realisiert werden dadurch, dass der Dichtungsträger fluiddicht mit dem Filterelement abschließt.

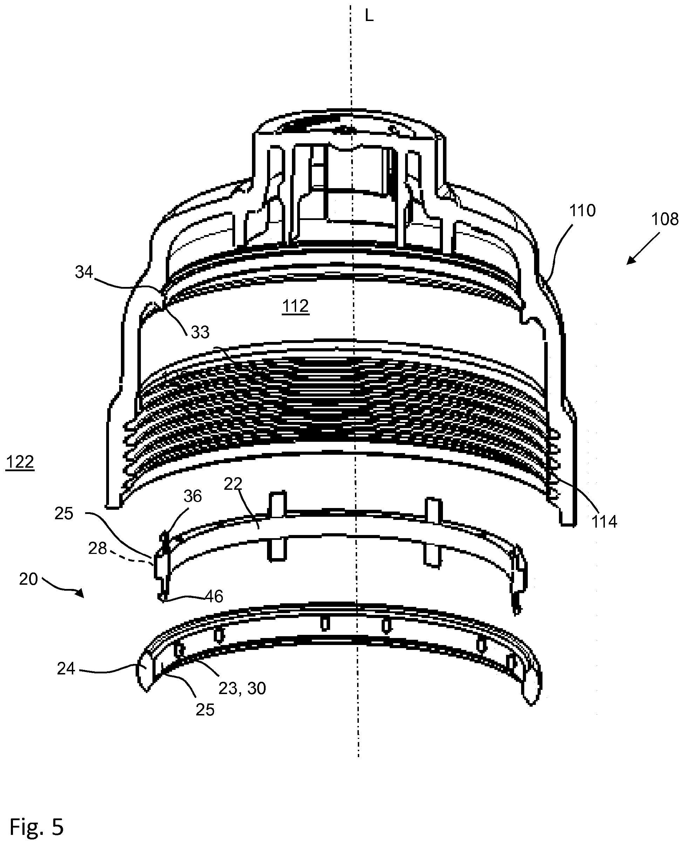

In Figur 5 ist eine isometrische Explosionsdarstellung des Filtersystems 100 nach Figur 4 zu erkennen. Dargestellt ist ein zweiter Gehäuseteil 110 mit Dichtungsvorrichtung 20. Dabei ist auf der Anlageseite 25 der Dichtung 24 zu sehen, dass die Haltekontur 23 der Dichtung 24 mehrere Rastelemente 30 aufweist, welche in entsprechende Aussparungen 28 des Dichtungsträgers 22 eingreifen. Die Aussparungen 28 sind in Figur 5 nicht zu erkennen, da sie auf der Außenseite des Dichtungsträgers 22 liegen, damit die Rastelemente 30 der außen auf dem Dichtungsträger 22 liegenden Dichtung 24 in diese Aussparungen 28, die beispielsweise als Bohrungen ausgebildet sein können, eingreifen können. Die Haltekontur 23 kann auf diese Weise eine formschlüssige Verbindung mit dem Dichtungsträger 22 aufweisen.

Alternativ kann die Verbindung der Dichtung 24 mit dem Dichtungsträger 22 wie in Figur 6 dargestellt ausgeführt werden. Dazu kann der Dichtungsträger 22 in ein Werkzeug eingelegt werden und mit einem Dichtungswerkstoff umspritzt werden, um die Dichtung 24 herzustellen. In dem Dichtungsträger 22 können ausgeformte Bohrungen angebracht sein, welche in einem Zweikomponentenprozess mit einem Elastomer gefüllt werden. Diese Elastomerfüllungen stellen dann die Haltekontur 23 dar, welche eine mechanische Verankerung der Dichtung 24 mit dem Dichtungsträger 22 bewirken.

Figur 6 zeigt eine Schnittdarstellung durch einen Teil eines Filtersystems 100 nach Figur 4 mit Fokus auf die montierte Dichtungsvorrichtung 20. Die Dichtungsvorrichtung 20 umfasst eine an einem Dichtungsträger 22 angeordnete Dichtung 24. Die Dichtung 24 weist ein Basisteil 60 und zwei axiale Überstande 62 auf, wobei das Basisteil 60 über die radial innenliegende Innenfläche 18 an der radial außenliegenden Anlageseite 25 des Dichtungsträgers 22 anliegt und von der Anlageseite 25 radial nach innen abgestützt ist. Dabei weist die Innenfläche 18 eine axiale Ausdehnung von ca. 50% der axialen Ausdehnung der Dichtung 24 auf.

Die axialen Überstande 62 sind zur Anlage an der Bauteildichtfläche 42 des ersten Gehäuseteils 109 und an der Bauteildichtfläche 44 des zweiten Gehäuseteils 110 vorgesehen. Eine solche Anordnung stellt in günstiger Weise sowohl eine axiale als auch eine radiale Abdichtung sicher, da die beiden schräg zueinander angeordneten Dichtungsflächen 18, 19 eine axiale und eine radiale Verpressung der Dichtung 24 erlauben. Die Dichtung 24 sieht so ein U-förmiges Bett. Eine schräg nach oben verlaufende Dichtfläche 19 der Dichtung 24 liegt beispielsweise an einer Bauteildichtfläche 44 des zweiten Gehäuseteils 110 an, während eine schräg nach unten verlaufende Dichtfläche 21 der Dichtung 24 an einer Bauteildichtfläche 42 des ersten Gehäuseteils 109 anliegen kann. Beim Verschließen der beiden Gehäuseteile 108, 109 wird die Dichtung 24 an die beiden Bauteildichtflächen 42, 44 angepresst und dichtet so zuverlässig den Gehäuseinnenraum 120 gegen die Umgebung 122 ab.

Weiter weist die Dichtung 24 eine Haltekontur 23 zur Fixierung am Dichtungsträger 22 auf. Außerdem weist der Dichtungsträger 22 ein Kupplungselement 36 zur Verbindung mit dem zweiten Gehäuseteil 110 auf. Die Dichtung 24 ist in Figur 6 mit ihren Konturen über die Begrenzung des ersten Gehäuseteils 109 sowie des zweiten Gehäuseteils 110 gezeichnet. In Realität wird die Dichtung bei der Montage natürlich zusammengepresst und liegt dann an diesen Begrenzungsflächen an. Von dem Gehäuseinneren 120 kann ein in dem Filtersystem 100 herrschender Überdruck die Dichtung 24 beaufschlagen und so die Dichtfläche 19 an die korrespondierende Bauteildichtfläche 44 des zweiten Gehäuseteils 110 sowie die Dichtfläche 21 an die korrespondierende Bauteildichtfläche 42 des Ansatzes 40 des ersten Gehäuseteils 109 pressen. Auf diese Weise ist eine zuverlässige und dauerhafte Abdichtung des Filtergehäuses 108 zwischen Gehäuseinnerem 120 und der Umgebung 122 ermöglicht.

Die Dichtung 24 ragt in axialer Richtung aus einer Dichtungsnut 31 des ersten und/oder zweiten Gehäuseteils 109, 110 heraus. Eine Bauteildichtfläche 42 des einen Gehäuseteils 109 ist in axialer Richtung außerhalb der Dichtungsnut 31 des anderen Gehäusebauteils 110 angeordnet. Eine Ausdehnung der Dichtung 24 ist in axialer Richtung größer als eine Ausdehnung der Dichtung 24 in radialer Richtung.

Die Haltekontur 23, die in Figur 6 in die Rastelemente 30 ausläuft, greift in diesem Ausführungsbeispiel durch eine Bohrung 28 mit Hinterschnitt durch den Dichtungsträger 22 durch, was zweckmäßigerweise durch Umspritzen des Dichtungsträgers 22 mit dem Werkstoff der Dichtung 24 hergestellt werden kann. Auf diese Weise ist die Dichtung 24 formschlüssig und verliersicher auf dem Dichtungsträger 22 aufgebracht, da die Haltekontur 23 eine formschlüssige Verbindung mit dem Dichtungsträger 22 aufweist. Auch kann die gesamte Dichtungsvorrichtung 20 so als Zweikomponentenbauteil in einem Kunststoff-Spritzgussprozess hergestellt werden. Dabei wird erst der Dichtungsträger 22 in einem Spritzgussprozess mit einem relativ steifen Kunststoff hergestellt. Danach wird die Dichtung 24 mit dem eigentlichen Dichtungswerkstoff auf den Dichtungsträger 22 aufgespritzt. Besonders vorteilhaft können dann die Rastelemente 30 durch Anspritzen von einer radialen Innenseite des Dichtungsträgers 22 bei dem Zweikomponenten-Spritzgussprozess gefertigt werden. Ein solcher Herstellungsprozess kann sehr flexibel gestaltet werden.

## Patentansprüche

1. Filtersystem (100) zum Filtern eines Fluids, umfassend
- ein Filterelement (10),
- ein Filtergehäuse (108), umfassend ein erstes Gehäuseteil (109) und ein zweites Gehäuseteil (110), in welchem das Filterelement (10) angeordnet ist,
- eine zwischen dem ersten Gehäuseteil (109) und dem zweiten Gehäuseteil (110) angeordnete Dichtungsvorrichtung (20) zur Abdichtung eines Gehäuseinnenraums (120) gegen eine Umgebung (122), welche Dichtungsvorrichtung (20) eine an einem Dichtungsträger (22) angeordnete Dichtung (24) aufweist,
wobei die Dichtung (24) mit wenigstens einer radial innenliegenden Innenfläche (18) an einer radial außenliegenden Anlageseite (25) des Dichtungsträgers (22) anliegt und von der Anlageseite (25) radial nach innen abgestützt ist, und
wobei der Dichtungsträger (22) Kupplungselemente (36, 46) zur Verbindung mit dem ersten Gehäuseteil (109) und/oder dem zweiten Gehäuseteil (110) aufweist, wobei die Kupplungselemente (36, 46) Schnapp- oder Verrastungselemente aufweisen, wobei die Kupplungselemente (36,46) in eine Kupplungsaufnahme (34) auf einer Innenseite (112) des ersten Gehäuseteils (109) und/oder des zweiten Gehäuseteils (110) eingreifen

2. Filtersystem nach Anspruch 1, wobei die Dichtung (24) wenigstens eine Haltekontur (23) aufweist zur Fixierung der Dichtung (24) an dem Dichtungsträger (22).

3. Filtersystem nach Anspruch 1 oder 2, wobei die Dichtung (24) im eingebauten Zustand bei geschlossenem Filtergehäuse (108) axial und radial verpresst ist.

4. Filtersystem nach einem der vorhergehenden Ansprüche, wobei die Dichtung (24) zwischen dem ersten Gehäuseteil (109), dem zweiten Gehäuseteil (110) und dem Dichtungsträger (22) gekammert ist.

5. Filtersystem nach einem der vorhergehenden Ansprüche, wobei die Dichtung (24) in axialer Richtung aus einer Dichtungsnut (31) des ersten und/oder zweiten Gehäuseteils (109, 110) herausragt.

6. Filtersystem nach einem der vorhergehenden Ansprüche, wobei die Dichtung (24) ein Basisteil (60) und wenigstens einen axialen Überstand (62) aufweist, wobei das Basisteil (60) über die radial innenliegende Innenfläche (18) an der radial außenliegenden Anlageseite (25) des Dichtungsträgers (22) anliegt und von der Anlageseite (25) radial nach innen abgestützt ist, wobei die Innenfläche (18) eine axiale Ausdehnung von wenigstens 50% der axialen Ausdehnung der Dichtung (24) aufweist.

7. Filtersystem nach Anspruch 6, wobei der wenigstens eine axiale Überstand (62) zur Anlage an einer Bauteildichtfläche (42) des ersten Gehäuseteils (109) oder an einer Bauteildichtfläche (44) des zweiten Gehäuseteils (110) vorgesehen ist.

8. Filtersystem nach Anspruch 5, wobei eine Bauteildichtfläche (42) des einen Gehäuseteils (109) in axialer Richtung außerhalb der Dichtungsnut (31) des anderen Gehäusebauteils (110) angeordnet ist.

9. Filtersystem nach einem der vorhergehenden Ansprüche, wobei die Dichtungsvorrichtung (20) als Einbauteil im Gehäuse (108) angeordnet ist.

10. Filtersystem nach einem der vorhergehenden Ansprüche, wobei eines der Gehäuseteile (109, 110) zum Abnehmen vom anderen der Gehäuseteile (109, 110) ausgebildet ist und der Dichtungsträger (22) an dem abnehmbaren der beiden Gehäuseteile (109, 110) befestigt ist.

11. Filtersystem nach einem der vorhergehenden Ansprüche, wobei das wenigstens eine Kupplungselement (36) eine Verrastung des Dichtungsträgers (22) mit dem ersten Gehäuseteil (109) und/oder dem zweiten Gehäuseteil (110) aufweist.

12. Filtersystem nach einem der vorhergehenden Ansprüche, wobei die Dichtung (24) an jedem der beiden Gehäuseteile (109, 110) nur eine Dichtfläche (19, 21) aufweist.

13. Filtersystem nach einem der vorhergehenden Ansprüche, wobei der Dichtungsträger (22) im eingebauten Zustand in axialer Richtung an einer Anlagefläche (33) eines der Bauteile (108, 109) anliegt und in seiner axialen Position fixiert ist.

14. Filtersystem nach einem der vorhergehenden Ansprüche, wobei die beiden Dichtflächen (19, 21) wenigstens abschnittsweise geneigt zu einer Längsachse (L) der Dichtungsvorrichtung (20) verlaufen.

15. Filtersystem nach einem der vorhergehenden Ansprüche, wobei die wenigstens eine Haltekontur (23) der Dichtung (24) ein oder mehrere Rastelemente (30) aufweist, welche in entsprechende Aussparungen (28) des Dichtungsträgers (22) eingreifen.

16. Dichtungsvorrichtung (20) zum Einbau in ein Filtersystem (100) nach einem der Ansprüche 1 bis 8, umfassend eine an einem Dichtungsträger (22) angeordnete Dichtung (24), wobei die Dichtung (24) mit einer radial innenliegenden Innenfläche (18) an einer radial außenliegenden Anlageseite (25) des Dichtungsträgers (22) anliegt und von der Anlageseite (25) radial nach innen abgestützt wird, und wobei der Dichtungsträger (22) Kupplungselemente (36, 46) zur Verbindung mit dem ersten Gehäuseteil (109) und/oder dem zweiten Gehäuseteil (110) aufweist, wobei die Kupplungselemente (36, 46) Schnapp- oder Verrastungselemente aufweisen, die akustisch eine ordnungsgemäße Montage signalisieren.

17. Dichtungsvorrichtung (20) nach Anspruch 16, wobei die Dichtung (24) wenigstens eine Haltekontur (23) aufweist zur Fixierung an dem Dichtungsträger (22).

18. Anordnung aus einem Filterelement (10), umfassend mindestens eine Endscheibe (16) und einen Filterbalg (12), und einer Dichtungsvorrichtung (20) nach Anspruch 16 oder 17, wobei ein Dichtungsträger (22) der Dichtungsvorrichtung (20) an einem radialen Außenumfang des Filterelements (10) angeordnet ist.

19. Anordnung nach Anspruch 18, wobei die Dichtungsvorrichtung (20) eine an dem Dichtungsträger (22) angeordnete gemeinsame Dichtung (24) zur Abdichtung von Reinseite (50) gegen Rohseite (52) des Filterelements (10) und/oder einem ersten Gehäuseteil (109) und einem zweiten Gehäuseteil (110) des Filtersystems (100) gegen eine Umgebung (122) aufweist.

## Claims

1. Filter system (100) for filtering a fluid, comprising
- a filter element (10),
- a filter housing (108), comprising a first housing component (109) and a second housing component (110) in which the filter element (10) is disposed,
- a sealing apparatus (20) disposed between the first housing component (109) and the second housing component (110) for sealing a housing interior area (120) against an environment (122), which sealing apparatus (20) features a seal (24) disposed on a seal carrier (22),
wherein the seal (24) with at least one radially inside-lying inner face (18) rests on the radially outside-lying contact face (25) of the seal carrier (22) and is radially inwardly supported by the contact face (25), and
wherein the seal carrier (22) features coupling elements (36, 46) for connecting to the first housing component (109) and/or to the second housing component (110), wherein the coupling elements (36, 46) feature snap or locking elements, wherein the coupling elements (36, 46) engage in a coupling receptacle (34) on the interior side (112) of the first housing component (109) and/or of the second housing component (110).

2. Filter system according to claim 1, wherein the seal (24) features at least one holding contour (23) for fixing the seal (24) on the seal carrier (22).

3. Filter system according to claim 1 or 2, wherein the seal (24), in the installed state and with closed filter housing (108), is axially and radially compressed.

4. Filter system according to one of the preceding claims, wherein the seal (24) is chambered between the first housing component (109), the second housing component (110) and the seal carrier (22).

5. Filter system according to one of the preceding claims, wherein the seal (24) protrudes in axial direction from a seal groove (31) of the first and/or second housing component (109, 110).

6. Filter system according to one of the preceding claims, wherein the seal (24) features a base part (60) and at least one axial protrusion (62), wherein the base part (60) rests on the radially outside-lying contact face (25) of the seal carrier (22) via the radially inside-lying inner face (18) and is supported radially inwardly by the contact face (25), wherein the inner face (18) features an axial extension of at least 50% of the axial extension of the seal (24).

7. Filter system according to claim 6, wherein the at least one axial protrusion (62) is provided for resting on a component sealing surface (42) of the first housing component (109) or on a component sealing surface (44) of the second housing component (110).

8. Filter system according to claim 5, wherein a component sealing surface (42) of one housing component (109) is disposed in axial direction outside the seal groove (31) of the other housing component (110).

9. Filter system according to one of the preceding claims, wherein the sealing apparatus (20) is disposed in the housing (108) as built-in component.

10. Filter system according to one of the preceding claims, wherein one of the housing components (109, 110) is realized for being detached from the other of the housing components (109, 110) and the seal carrier (22) is attached to the detachable one of the two housing components (109, 110).

11. Filter system according to one of the preceding claims, wherein the at least one coupling element (36) features a locking of the seal carrier (22) with the first housing component (109) and/or the second housing component (110).

12. Filter system according to one of the preceding claims, wherein the seal (24) features only one sealing surface (19, 21) on each of the two housing components (109, 110).

13. Filter system according to one of the preceding claims, wherein the seal carrier (22), in the installed state, rests in axial direction on a contact surface (33) of one of the components (108, 109) and is fixed in its axial position.

14. Filter system according to one of the preceding claims, wherein both sealing surfaces (19, 21) extend at least sectionwise inclining with regard to a longitudinal axis (L) of the sealing apparatus (20).

15. Filter system according to one of the preceding claims, wherein the at least one holding contour (23) of the seal (24) features one or more latching elements (30) which engage in the corresponding recesses (28) of the seal carrier (22).

16. Sealing apparatus (20) for being installed in a filter system (100) according to one of the claims 1 to 8, comprising a seal (24) disposed on the seal carrier (22), wherein the seal (24) with a radially inside-lying inner face (18) rests on the radially outside-lying contact face (25) of the seal carrier (22) and is radially inwardly supported by the contact face (25), and wherein the seal carrier (22) features coupling elements (36, 46) for connecting to the first housing component (109) and/or the second housing component (110), wherein the coupling elements (36, 46) feature snap or locking elements which acoustically signal a correct assembly.

17. Sealing apparatus (20) according to claim 16, wherein the seal (24) features at least one holding contour (23) for fixing on the seal carrier (22).

18. Arrangement of a filter element (10), comprising at least one end disc (16) and one filter bellows (12), and of a sealing apparatus (20) according to claim 16 or 17, wherein a seal carrier (22) of the sealing apparatus (20) is disposed on a radial outer periphery of the filter element (10).

19. Arrangement according to claim 18, wherein the sealing apparatus (20) features a common seal (24) disposed on the seal carrier (22) for sealing the clean side (50) against the raw side (52) of the filter element (10) and/or on a first housing component (109) and on a second housing component (110) of the filter system (100) against an environment (122).

## Revendications

1. Système de filtre (100) destiné à filtrer un fluide, comprenant
- un élément filtrant (10),
- un boîtier de filtre (108), comprenant un premier composant de boîtier (109) et un second composant de boîtier (110) dans lequel est disposé l'élément filtrant (10),
- un dispositif d'étanchéité (20) disposé entre le premier composant de boîtier (109) et le second composant de boîtier (110) destiné à étancher un espace intérieur du boîtier (120) contre un environnement (122), lequel dispositif d'étanchéité (20) présente un joint d'étanchéité (24) disposé sur un porte-joint (22),
dans lequel le joint d'étanchéité (24) s'appuie avec au moins une surface intérieure (18) disposée en sens radial à l'intérieur contre un côté d'appui (25) disposé en sens radial à l'extérieur du porte-joint (22) et supporté par le côté d'appui (25) en sens radial vers l'intérieur, et
dans lequel le porte-joint (22) présente des éléments d'accouplement (36, 46) destinés au raccordement au premier composant de boîtier (109) et/ou au second composant de boîtier (110), dans lequel les éléments d'accouplement (36, 46) présentent des éléments d'encliquetage et d'accrochage, dans lequel les éléments d'accouplement (36, 46) viennent en prise avec un logement d'accouplement (34) sur une face intérieure (112) du premier composant de boîtier (109) et/ou du second composant de boîtier (110).

2. Système de filtre selon la revendication 1, dans lequel le joint d'étanchéité (24) présente au moins un contour de fixation (23) destiné à fixer le joint d'étanchéité (24) sur le porte-joint (22).

3. Système de filtre selon la revendication 1 ou 2, dans lequel le joint d'étanchéité (24), en état installé et le boîtier de filtre (108) fermé, est comprimé en sens axial et radial.

4. Système de filtre selon l'une des revendications précédentes, dans lequel le joint d'étanchéité (24) est encerclé entre le premier composant de boîtier (109), le second composant de boîtier (110) et le porte-joint (22).

5. Système de filtre selon l'une des revendications précédentes, dans lequel le joint d'étanchéité (24) fait saillie en sens axial d'une rainure d'étanchéité (31) du premier et/ou du second composant de boîtier (109, 110).

6. Système de filtre selon l'une des revendications précédentes, dans lequel le joint d'étanchéité (24) présente un élément de base (60) et au moins une extrémité en porte-à-faux axiale (62), dans lequel l'élément de base (60) est appliqué contre le côté d'appui (25) disposé en sens radial à l'extérieur du porte-joint (22) par l'intermédiaire de la surface intérieure (18) disposée en sens radial à l'intérieur et supporté par le côté d'appui (25) en sens radial vers l'intérieur, dans lequel la surface intérieure (18) présente une extension axiale d'au moins 50% de l'extension axiale du joint d'étanchéité (24).

7. Système de filtre selon la revendication 6, dans lequel l'extrémité en porte-à-faux axiale (62), au moins au nombre d'une, est prévue pour être appliquée contre une surface d'étanchéité de composant (42) du premier composant de boîtier (109) ou contre une surface d'étanchéité de composant (44) du second composant de boîtier (110).

8. Système de filtre selon la revendication 5, dans lequel une surface d'étanchéité de composant (42) d'un composant de boîtier (109) est disposée en sens axial à l'extérieur de la rainure d'étanchéité (31) de l'autre composant de boîtier (110).

9. Système de filtre selon l'une des revendications précédentes, dans lequel le dispositif d'étanchéité (20) est disposé en tant que composant intégré dans le boîtier (108).

10. Système de filtre selon l'une des revendications précédentes, dans lequel l'un des composants de boîtier (109, 110) est conçu pour être détaché de l'autre des composants de boîtier (109, 110) et le porte-joint (22) est attaché au composant détachable des deux composants de boîtier (109, 110).

11. Système de filtre selon l'une des revendications précédentes, dans lequel l'élément d'accouplement (36), au moins au nombre d'un, présente un enclenchement du porte-joint (22) avec le premier composant de boîtier (109) et/ou le second composant de boîtier (110).

12. Système de filtre selon l'une des revendications précédentes, dans lequel le joint d'étanchéité (24) présente seulement une surface d'étanchéité (19, 21) sur chacun des deux composants de boîtier (109, 110).

13. Système de filtre selon l'une des revendications précédentes, dans lequel le porte-joint (22), en état installé, est appliqué en sens axial sur une surface de contact (33) de l'un des composants (108, 109) et fixé dans sa position axiale.

14. Système de filtre selon l'une des revendications précédentes, dans lequel les deux surfaces d'étanchéité (19, 21) s'étendent au moins sur certaines sections de manière inclinée par rapport à un axe longitudinal (L) du dispositif d'étanchéité (20).

15. Système de filtre selon l'une des revendications précédentes, dans lequel un contour de fixation (23), au moins au nombre d'un, du joint d'étanchéité (24) présente un ou plusieurs éléments d'encliquetage (30) qui viennent en prise avec des évidements (28) correspondants du porte-joint (22).

16. Dispositif d'étanchéité (20) destiné à être installé dans un système de filtre (100) selon l'une des revendications 1 à 8, comprenant un joint d'étanchéité (24) disposé sur un porte-joint (22), dans lequel le joint d'étanchéité (24) s'appuie avec une surface intérieure (18) disposée en sens radial à l'intérieur contre un côté d'appui (25) disposé en sens radial à l'extérieur du porte-joint (22) et supporté par le côté d'appui (25) en sens radial vers l'intérieur, et dans lequel le porte-joint (22) présente des éléments d'accouplement (36, 46) destinés au raccordement au premier composant de boîtier (109) et/ou au second composant de boîtier (110), dans lequel les éléments d'accouplement (36, 46) présentent des éléments d'encliquetage et d'accrochage qui émettent un signal acoustique indiquant que l'installation a été réalisée correctement.

17. Dispositif d'étanchéité (20) selon la revendication 16, dans lequel le joint d'étanchéité (24) présente au moins un contour de fixation (23) pour la fixation sur le porte-joint (22).

18. Ensemble constitué d'un élément filtrant (10), comprenant au moins un disque d'extrémité (16) et un soufflet de filtre (12), et d'un dispositif d'étanchéité (20) selon la revendication 16 ou 17, dans lequel un porte-joint (22) du dispositif d'étanchéité (20) est disposé sur une circonférence extérieure radiale de l'élément filtrant (10).

19. Ensemble selon la revendication 18, dans lequel le dispositif d'étanchéité (20) présente un joint d'étanchéité (24) commun disposé sur le porte-joint (22) pour étancher le côté pur (50) contre le côté brut (52) de l'élément filtrant (10) et/ou sur un premier composant de boîtier (109) et sur un second composant de boîtier (110) du système de filtre (100) contre un environnement (122).
